# EUROPÄISCHE PATENTSCHRIFT

(11) **EP 3 651 921 B1**
(45) Veröffentlichungstag und Bekanntmachung des Hinweises auf die Patenterteilung: **28.07.2021**
(21) Anmeldenummer: 18745487.1
(22) Anmeldetag: 08.06.2018
(51) Int. Cl.: C04B 35/515, B22F 3/02, B22F 3/12, C04B 41/45, C04B 35/56, C04B 41/50, B22F 3/24, C04B 35/64

(54) **VERFAHREN ZUM SINTERN VON METALLEN UND NICHT OXIDISCHEN KERAMIKEN**
METHOD FOR SINTERING METALS AND NON-OXIDE CERAMICS
PROCÉDÉ POUR FRITTER DES MÉTAUX ET DES CÉRAMIQUES NON-OXYDES

(30) Priorität: 13.07.2017 DE 102017006659
(43) Veröffentlichungstag der Anmeldung: 20.05.2020
(73) Patentinhaber: Forschungszentrum Jülich GmbH, 52425 Jülich (DE)
(72) Erfinder: DASH, Apurv, 52428 Jülich (DE); GONZALEZ, Jesus, 52066 Aachen (DE); VAßEN, Robert, 52134 Herzogenrath (DE); GUILLON, Olivier, 52428 Jülich (DE)
(86) Internationale Anmeldenummer: PCT/DE2018/000179
(87) Internationale Veröffentlichungsnummer: WO 2019/011359

(56) Entgegenhaltungen:
- DE-C- 702 877
- GB-A- 1 405 749
- US-A- 5 445 787
- YANG ET AL: "Molten salt synthesis of Mo"2C powder using a mechanically milled powder", MATERIALS LETTERS, ELSEVIER, AMSTERDAM, NL, Bd. 61, Nr. 26, 1. Oktober 2007 (2007-10-01), Seiten 4815-4817, XP022230643, ISSN: 0167-577X, DOI: 10.1016/J.MATLET.2007.03.040

## Beschreibung

Die Erfindung bezieht sich auf die Sinterung von oxidationsempfindlichen Materialien, nämlich Metalle oder nicht oxidische Keramiken, die in ihrer Ausgangsform als Pulver vorliegen.

### Stand der Technik

Unter dem Begriff Sintern ist im Allgemeinen ein Verfahren zur Herstellung oder Veränderung von Werkstoffen zu verstehen, bei dem feinkörnige keramische oder metallische Stoffe erhitzt werden, teilweise auch unter erhöhtem Druck. Da die maximalen Sintertemperaturen jedoch unterhalb der Schmelztemperatur der Hauptkomponenten eingestellt werden, bleibt in der Regel die äußere Form des Werkstückes erhalten. Beim Sintern verdichten sich die Partikel des Ausgangsmaterials und füllen so die Porenräume aus Es kommt regelmäßig zu einer Schwindung.

Die Temperaturbehandlung während des Sinterns bewirkt, dass aus einem fein- oder grobkörnigen Grünkörper, der in einem vorangegangenen Prozessschritt - beispielsweise mittels Extrusion - geformt wurde, ein festes Werkstück erzeugt wird. Durch den Sinterschritt erhalten die Grünkörper die gewünschten endgültigen Eigenschaften, wie Härte, Festigkeit oder Temperaturleitfähigkeit, die im jeweiligen Einsatz erforderlich sind.

Es ist bekannt, dass sowohl Synthese- als auch Sinterschritte von nicht oxidischen Materialien in der Regel in einer geschützten Atmosphäre oder im Vakuum durchgeführt werden, um eine Oxidation des Materials bei Anwesenheit von Sauerstoff zu unterbinden. Daher ist es eine unvermeidbare Anforderung, dass das Prozessieren von oxidationsempfindlichen Materialien, die vor einer ungewollten Oxidation geschützt werden müssen, regelmäßig in einer geschützten Atmosphäre von Argon, Stickstoff oder im Vakuum erfolgt.

Ebenfalls bekannt ist der Syntheseweg für oxidische und karbidische keramische Pulver über eine Salzschmelze. Auch bei diesem Verfahren wird immer eine geschützte Atmosphäre oder Vakuum eingestellt, was die Kosten für eine solche Synthese in die Höhe treibt.

So ist aus die Herstellung von gasdichten Werkstücken aus keramischen Werkstoffen, insbesondere aus SiC bereits aus DE 702877 C bekannt. Dort wird ein Verfahren offenbart, bei dem ein Werkstück aus SiC in einem Bad von geschmolzenem MgCl₂ mit diesem Salz getränkt und dann nachgebrannt wird, das heißt bei dem ein bereits gesintertes Werkstück mit einem Salzbad nachbehandelt wird. Der Tränk- und Brennschritt kann dabei mehrmals wiederholt werden.

Ferner ist aus GB 1405749 A ein Verfahren bekannt, bei dem ein metallisches Pulver kalt isostatisch verpresst wird. Der Pressling wird mit einem Dichtungsmittel beschichtet, und schließlich aufgeheizt und extrudiert. Das Dichtungsmittel, das den Grünkörper vor Oxidation schützt und das Warmextrudieren in ungeschützter Atmosphäre erlaubt, kann ein Salz sein; in diesem Fall wird der verpresste Grünkörper in ein Schmelzbad eingetaucht.

Die Pulvermetallurgie ist ein bekannter Herstellungsprozess für kleine und nicht triviale Geometrien, die jeweils mit einem Ausgangspulver starten. Dafür sind sowohl metallische als auch keramische Materialien geeignet. Von allen Herstellungsschritten ist regelmäßig der Sinterprozess der Energie-intensivste Schritt. Der Sinterschritt ist insofern entscheidend und kritisch für die späteren Eigenschaften der hergestellten Materialien, da die Sinterung der Metalle bzw. der nicht oxidischen Keramiken mit einer unvermeidbaren Oxidation der Materialien einhergeht.

In der Regel erfolgt der Sinterschritt für Metalle und nicht oxidischen Keramiken in einer abgeschlossenen Schutzatmosphäre und/oder im Vakuum. Da aber selbst in einem guten Vakuum von unter 1 mbar Sauerstoff in Form des Sauerstoffpartialdrucks vorhanden ist, kommt es zwangsläufig zu einer Oxidation des zu sinternden Materials. Dies wiederum beeinflusst den Sintervorgang und führt zu einer oxidischen zweiten Phase und in Folge zu einer weniger guten Verdichtung des Materials.

Die Notwendigkeit einer Schutzatmosphäre ist darin begründet, dass mit zunehmender Temperatur die Oxidationsgeschwindigkeit der vorgenannten Materialien stark zunimmt, und damit die Ausbildung weiterer oxidischer Phasen bis hin zur vollständigen Umwandlung des Ausgangsmaterials in die entsprechenden Oxide stattfindet.

Daher wird in der Regel bei Sinterschritten eine Schutzatmosphäre, wie beispielsweise reiner Wasserstoff oder eine Mischung aus Wasserstoff und Argon eingesetzt, die einen nur sehr geringen Sauerstoffpartialdruck aufweisen. Dennoch kann nicht ausgeschlossen werden, dass sich Reste an Sauerstoff an irgendeiner Stelle im Sinterprozess einschleichen, und da sich pulverförmige Materialien, insbesondere feinkörnige Metallpulver, bekanntermaßen wie Zunder verhalten, wird es insofern immer zu einer Art von Oxidation auf der Oberfläche des zu sinternden Materials kommen.

Daher benötigt der Sinterschritt unter einer Schutzgasatmosphäre immer einen kontinuierlichen Fluss und einen gasdichten Ofen, der die Sinterkammer von der Umgebungsatmosphäre abschottet. Der ständige Gasfluß, der in der Regel nicht erneuert bzw. rezykliert werden kann, trägt daher in nicht unerheblichen Maß zu den Herstellungskosten des gesinterten Materials bei. Zudem sind gasdichte Öfen ebenfalls ein nicht zu unterschätzender Kostenfaktor.

Alternative Druck-unterstützte Sinterprozesse, wie beispielsweise das Heißpressen, das heiß-isostatische Pressen oder das Flammen unterstützte Plasmasintern, können vorzugsweise im Vakuum durchgeführt werden. Entsprechende Vakuumapparaturen und deren Betrieb sind jedoch ebenfalls sehr kostenintensiv.

Die Aufgabe der Erfindung ist es, einen alternativen Sinterprozess für die Herstellung von verdichteten, oxidationsempfindlichen Materialien, wie beispielsweise Metalle oder nicht oxidische Keramiken, bereit zu stellen, der gegenüber den bisherigen Verfahren deutlich kostengünstiger ist und bei dem insbesondere für die Sinterung der oxidationsempfindlichen Materialien auf den Einsatz von Schutzgas oder Vakuum verzichtet werden kann.

Die Aufgabe der Erfindung wird gelöst durch ein Verfahren zur Sinterung von oxidationsempfindlichen Materialien mit den Merkmalen des Hauptanspruchs. Vorteilhafte Ausgestaltungen des Verfahrens ergeben sich aus den darauf rückbezogenen Ansprüchen.

### Gegenstand der Erfindung

Im Rahmen der Erfindung wurde herausgefunden, dass es möglich ist, bei der Verdichtung (Sinterung) von oxidationsempfindlichen Materialien, nämlich von metallischen oder nicht oxidischen, keramischen Komponenten, auf die bislang übliche Schutzatmosphäre, bzw. den Einsatz im Vakuum zu verzichten, ohne dass das oxidationsempfindliche Material eine Oxidation erfährt.

Bei dem erfindungsgemäßen Verfahren werden dazu die metallischen oder nicht oxidischen, keramischen Komponenten (Grünkörper), die in der Regel über ein Pulver-metallurgisches Verfahren synthetisiert wurden, in Anwesenheit von Luft bzw. Sauerstoff zusammen mit wenigstens einem Metallhalogensalz bis über dessen Schmelzpunkt aufgeheizt, so dass die zu sinternden Komponenten in einer Salzschmelze (Schmelzpool) angeordnet sind, die eine jegliche Sauerstoffzufuhr zu den metallischen oder nicht oxidischen keramischen Komponenten wirksam verhindert.

Für die Formgebung der pulverförmigen Ausgangsstoffe steht eine Vielzahl von Verfahren bereit, wie beispielsweise das Matrixpressen, die Extrusion oder auch das additive Manufacturing, wie beispielsweise der 3D-Druck. Sobald die pulverförmigen Komponenten durch eine Druckanwendung eine gewisse Festigkeit erlangen, spricht man auch von einem Grünkörper.

Das Metallhalogensalz, in welches der zu sinternde Grünkörper erfindungsgemäß eingebettet wird, bildet bei höheren Temperaturen oberhalb seiner Schmelztemperatur eine Salzschmelze aus, und fungiert dabei als ein Medium, welches als Schutz vor dem vorhandenen Sauerstoff dient. Dazu bildet die Salzschmelze einen undurchlässigen Schmelzpool aus, der eine kaum von Null verschiedene Löslichkeit für Sauerstoff aufweist. Dadurch wird ein Lösen des Sauerstoffs aus der vorhandenen Sauerstoff-haltigen Atmosphäre in dem Schmelzpool wirksam unterbunden und eine Diffusion zu dem oxidationsempfindlichen Grünkörper sicher verhindert. Die Salzschmelze wirkt insofern als eine Art Oxidationsbarriere zwischen der zu sinternden oxidationsempfindlichen Komponente (Grünkörper) und der sie umgebenden sauerstoff- haltigen Atmosphäre.

Für die Zeit bis zum Erreichen des Schmelzpunktes wird ein Kontakt von Sauerstoff und dem oxidationsempfindlichen Grünkörper dadurch verhindert, dass der Grünkörper zuvor mit einer gasdichten Metallhalogensalzummantelung versehen wird, die bis zum Erreichen der Schmelztemperatur des Metallhalogensalzbades wirksam eine Zufuhr von Sauerstoff an den Grünkörper unterbindet.

Für einen solches Metallhalogensalzbad können dazu beispielweise alle wasserlöslichen Alkali- oder Erdalkalisalze verwendet werden, dessen Schmelzpunkte unterhalb der Sintertemperaturen der zu sinternden Materialien liegen. Dabei sind insbesondere Chloride oder Bromide des Natriums oder des Kaliums aufgrund ihrer geringen Schmelzpunkte und großen Löslichkeit in Wasser besonders vorteilhaft. Die Löslichkeit in Wasser ist dabei entscheidend, um die gesinterten Komponenten nach der Sinterung auf einfache Weise von dem sie umgebenen Metallhalogensalz zu trennen.

Bei dem eingesetzten Metallhalogensalz (NZ) handelt es sich um ein Salz mit N = wenigstens ein Element aus der Gruppe (Li, Na, K, Rb, Cs, Mg, Be, Ca, Ba) und Z = wenigstens ein Element aus der Gruppe (F, Cl, Br, I) oder eine Mischung entsprechender Metallhalogensalze.

Erfindungsgemäß werden die zur Sinterung vorgesehenen Komponenten als Grünkörper in wenigstens ein geeignetes Metallhalogensalz eingebettet bzw. mit diesem ummantelt. Dabei wird in einem weiteren Verfahrensschritt sichergestellt, dass die salzartige Ummantelung in Bezug auf den Grünkörper einerseits vollständig ist und die Ummantelung andererseits verdichtet und somit undurchlässig für Sauerstoff ist.

Das verpresste Salz in der Ummantelung weist regelmäßig eine theoretische Dichte von mehr als 90 %, vorteilhaft sogar mehr als 95 % auf. Das verpresste Salz weist dann zwar immer noch einzelne Poren auf, diese sind allerdings nicht durchgehend, so das in Summe bezogen auf das darin eingebettete Pellet eine hermetische, gasdichte Abdichtung vorliegt.

Die Ummantelung der zu sinternden Komponenten und die Verdichtung des den Grünkörper umgebenen Metallhalogensalzes kann beispielsweise über uniaxiales Verpressen oder auch über isostatisches Pressen der zu sinternden Komponenten in einer Pressform erfolgen, die einen größeren Durchmesser als die zu sinternden Komponenten aufweist. Dieser Verfahrensschritt erfolgt bei moderaten Temperaturen bis zu 200 °C, insbesondere vorteilhaft bei Raumtemperatur. Das Verpressen erfolgt insbesondere bei Drücken zwischen 10 MPA und 1000 MPA. Wichtig für das erfindungsgemäße Verfahren ist, dass der Salzmantel die zu sinternde Komponente (Grünkörper) vollständig umschließt.

Halogensalze können zu Grünkörperdichten von mehr als 95 % ihrer theoretischen Dichte verdichtet werden. Dieses Phänomen beruht auf der Duktilität von Halogensalzen unter bestimmten Druckbedingungen bei Raumtemperatur. Der Grünkörper weist eine geringe Porosität auf, aber bei dieser Porosität handelt es sich um geschlossene Poren, so dass die Ummantelung im Rahmen dieser Erfindung als gasdicht zu betrachten ist.

Permeabilitätsmessungen mit Helium und Luft an KBr-Tabletten, die unter den selben Druck und Temperaturbedingungen gepresst wurden, führten zu Durchlässigkeitswerten von 1,4 10⁻⁷ hPa·dm³·s⁻¹, was im Sinne der vorliegenden Erfindung als gasdicht bezeichnet werden kann.

KBr hat sich insofern als ein besonders geeignetes Metallhalogensalz herausgestellt, da es bei Raumtemperatur sehr gut verpresst werden kann und somit eine sehr gute Abdichtung darstellt. Weiterhin konnte auch NaCl, sogar mit etwas Zusatz von Wasser, bei Raumtemperatur sehr gut, d. h. nahezu gasdicht, um eine zu sinternde Komponente verpresst werden.

Die gasdichte Ummantelung der zu sinternden Komponente mit wenigstens einem Metallhalogensalz bewirkt in der Salzschmelze für die Zeit des Aufheizens bis zur Schmelze, wo das umgebende Metallhalogensalzbad noch eine gewisse Porosität aufweist, eine zusätzliche Barriere zwischen der vorhandenen sauerstoff-haltigen Atmosphäre und den reaktiven Komponenten des zu sinternden Grünkörpers. Für die hermetische Abdichtung des Grünkörpers ist insbesondere die hohe Dichte des gepressten Metallhalogensalzes verantwortlich.

In einer ersten Ausführungsform der Erfindung wird ein mit wenigstens einem Metallhalogensalz umschlossener Grünkörper nunmehr in einem geeigneten Behälter, beispielsweise einem Schmelztiegel, in einem Metallhalogensalzbett angeordnet, insbesondere vollständig darin eingebettet. Das hierfür eingesetzte Metallhalogensalz kann identisch mit dem Metallhalogensalz sein, welches bereits für die Ummantelung der zu sinternden Komponenten eingesetzt wurde. Dies ist aber nicht zwingend erforderlich.

Die Anordnung in einem Metallhalogensalzbett bedeutet im Rahmen dieser Erfindung, dass der Grünkörper hierbei vollkommen von diesem Metallhalogensalz umschlossen ist. Das Metallhalogensalzbett weist dabei zunächst eine gewisse Porosität auf, die erste beim vollständigen Aufschmelzen verloren geht.

Der Schmelztiegel mit dem Salzbad und der mit dem Salz verpressten Komponente werden zusammen aufgeheizt. Dies kann beispielsweise in einem Ofen mit einer Widerstandserwärmung erfolgen. Bei diesem Aufheizschritt wird kein zusätzlicher Druck angewendet. Die Erwärmung erfolgt dabei bis wenigstens 300 °C bzw. bis zur Schmelztemperatur des eingesetzten Metallhalogensalzes. Wurden mehrere unterschiedliche Metallhalogensalze eingesetzt erfolgt die Aufheizung bis wenigstens zu der Temperatur, bei der die Metallhalogensalzmischung aufschmilzt und eine flüssige Salzschmelze ausbildet. Im Anschluss kann der Schmelztiegel weiter bis zu der für die Sinterung der Komponenten erforderlichen Temperatur aufgeheizt werden. Eine maximale Temperatur von 1400 °C sollte jedoch regelmäßig nicht überschritten werden, da andernfalls die Gefahr besteht, dass das eingesetzte Metallhalogensalz oder eine eingesetzte Metallhalogensalzmischung in nicht unerheblichem Maße verdampft. Es muss sichergestellt werden, dass die Salzschmelze die zu sinternden Komponenten in jedem Fall vollständig umschließt, um eine Sauerstoffzufuhr garantiert zu unterbinden.

Vorteilhaft muss bei diesem Verfahrensschritt, anders als beim bisherigen Stand der Technik, keine besondere inerte Atmosphäre eingestellt werden. Das Verfahren kann somit auch an Luft durchgeführt werden.

Die dichte Ummantelung der zu sinternden Komponenten dient bei diesem Verfahrensschritt der Abschottung der Komponenten vor Sauerstoff, welcher andernfalls in der porösen Metallhalogensalzschüttung während des Aufheizvorganges bis zur Schmelze des Salzes zu einer ungewollten Oxidation der zu sinternden Komponenten führen könnte.

Nach dem Aufheizschritt wird der Schmelztiegel wieder abgekühlt und der Inhalt (gesinterter Grünkörper in einem erkalteten Salzbad) in eine Flüssigkeit, vorzugsweise in ein Wasserbad gegeben, wobei sich das Salz in der Flüssigkeit zumindest teilweise auflöst und die gesinterte Komponente übrig bleibt. Als Flüssigkeit kommen neben reinem Wasser auch wässrige Lösungen oder kurzkettige Alkohole in Betracht, sofern das eingesetzte Salz darin ausreichend löslich ist.

Bei diesem Verfahrensschritt löst sich sowohl das Salz aus dem Salzbad als auch das Salz aus der Ummantelung zumindest teilweise in der Flüssigkeit auf, so dass die gesinterte Komponente entnommen werden kann. Optional kann die Flüssigkeit, insbesondere das Wasser, zur Verbesserung der Löslichkeit des Salzes dazu erwärmt werden.

Die Menge an Flüssigkeit bestimmt dabei, ob sich das vorhandene Salz nicht nur teilweise sondern beispielsweise vollständig darin auflöst. Entscheidend dabei ist jedoch nur, dass die gesinterte Komponente aus dem erstarrten Salzbad entnommen werden kann. Gegebenenfalls kann diese im Anschluss noch einmal separat mit einer Flüssigkeit abgewaschen werden.

In einer weiteren Ausführungsform der Erfindung wird zunächst Metallhalogensalz in einem geeigneten Behälter, beispielsweise einem Schmelztiegel, bis zur Schmelze des Metallhalogensalzes aufgeheizt. Die zu sinternde Komponente wird analog zum vorherigen Ausführungsbeispiel zunächst vollständig mit einem Metallhalogensalz ummantelt und gasdicht verpresst und anschließend direkt in die Salzschmelze gegeben, bzw. eingetaucht. Im Anschluss kann die Temperatur des Metallhalogensalzbades, wie bei der ersten Ausführungsform, je nach der für die Sinterung der Komponenten erforderlichen Temperatur, weiter erhöht werden, beispielsweise auf 800 °C. Eine maximale Temperatur von 1400 °C sollte jedoch auch bei diesem Verfahrensschritt nicht überschritten werden.

Es folgt die Abkühlung und das zumindest teilweise Auflösen des Metallhalogensalzes in einer Flüssigkeit analog zur ersten Ausführungsform, so dass die gesinterte Komponente entnommen werden kann.

In einer Abwandlung des erfindungsgemäßen Verfahrens wird parallel zu den vorgenannten Verfahrensschritten optional wenigstens ein Silikat, vorzugsweise ein Natrium-, Kalium- oder Lithiumsilikat (Na₂SiO₃, K₂SiO₃ oder Li₂SiO₃) ebenfalls in einem weiteren Schmelztiegel aufgeheizt. Vorteilhaft erfolgt dieser Schritt im selben Ofen, wo das Halogenschmelzbad mit dem Grünkörper aufgeheizt wird, so dass das geschmolzene Silikat und die Salzschmelze mit der zu sinternden Komponente dieselbe Temperatur aufweisen.

Bei einer Temperatur oberhalb der Schmelztemperatur des eingesetzten Silikats, also beispielsweise um 1100 °C für Natriumsilikat mit einem Schmelzpunkt Tₘ = 1088° C, wird das geschmolzene Silikat vorsichtig auf die Oberfläche des Salzbades mit dem Grünkörper aufgebracht, im einfachsten Fall gegossen. Aufgrund des Dichteunterschieds zwischen dem geschmolzenen Metallhalogensalz aus dem Salzbad und dem geschmolzenen Silikat und aufgrund der gegenseitigen Unlöslichkeit schwimmt das geschmolzene Silikat auf dem geschmolzenen Metallhalogensalz auf. Das aufschwimmende Silikat verhindert so vorteilhaft ein ungewolltes Verdunsten des geschmolzenen Metallhalogensalzes aus dem Salzbad. Auf diese Weise kann die Temperatur für die Sinterung der Komponente im Bedarfsfall sogar auf über 1400 °C bis maximal 1600 °C erhöht werden, ohne dass es zu einem nennenswerten Verlust an Metallhalogensalz aus dem Salzbad kommt.

Es folgt die Abkühlung und das Auflösen sowohl des Metallhalogensalzes als auch vorzugsweise des eingesetzten Silikats in einer Flüssigkeit analog zur den ersten Ausführungsformen, so dass die nunmehr gesinterte Komponente entnommen werden kann.

Es wird nochmals festgehalten, dass das erfindungsgemäße Verfahren nicht die Synthese der Komponenten aus den entsprechenden, metallischen und/oder oxidationsempfindlichen Ausgangsstoffen beschreibt, sondern lediglich einen Verdichtungsschritt (Sinterung) von zuvor bereits zum Beispiel über ein Pulvermetallurgisches Verfahren hergestellten Komponenten (Grünkörper) umfasst. Dabei kann das Verfahren auf alle bekannten Grünkörper, umfassend Metalle, wie beispielsweise Al, Cu oder Titan, Legierungen oder keramische Materialien angewendet werden, die während der Sinterung bislang regelmäßig eine geschützte Atmosphäre benötigen.

Die Grenze des erfindungsgemäßen Verfahren ist in Abhängigkeit des verwendeten Salzes lediglich durch die maximale Temperatur von ca. 1400 °C vorgegeben, da es oberhalb dieser Temperaturen in der Regel zu einer starken Verdunstung des Salzes kommen kann, und die Gefahr besteht, dass der Salzschmelzpool nicht mehr eine vollständige Umhüllung des zu sinternden Grünkörpers sicherstellt. Alle bei und unterhalb dieser Temperatur sinterfähigen Materialien können somit regelmäßig für eine Sinterung eingesetzt werden.

Sofern jedoch ausreichend viel Metallhalogensalz verwendet wird, könnte gegebenenfalls auch eine Sintertemperatur eingestellt werden, bei der in Kauf genommen wird, dass das verwendete Salz zwischenzeitlich zumindest teilweise verdampft. Es muss nur sichergestellt werden, dass der zu sinternde Grünkörper während der höheren Temperaturen vollständig von geschmolzenem Metallhalogensalz umhüllt ist und bleibt.

Für Komponenten, welche eine höhere Sintertemperatur bis ca. 1600 °C benötigen, kann zudem auf die Ausführungsform mit dem flüssigen Silikatdeckel zurückgegriffen werden.

Die vorliegende Erfindung verhindert vorteilhaft hohe Kosten, die bislang bei Sinterschritten für notwendige aufwändige Kontrollen der Ofenatmosphären bei Einsatz eines Schutzgases anfallen, und ermöglicht so auch die Bereitstellung eines preisgünstigen großtechnischen Sinterprozesses für oxidationsempfindliche Komponenten, insbesondere für Metalle und/oder nicht oxidische Keramiken.

### Spezieller Beschreibungsteil

Im Weiteren wird die Erfindung anhand von mehreren Ausführungsbeispielen näher erläutert, ohne dass dies zu einer Einschränkung des breiten Schutzumfanges führen soll.

Zur erfindungsgemäßen Herstellung der gesinterten Metalle wurden zunächst metallische Pulver zu Grünkörper gepresst, die anschließend erfindungsgemäß mit einem Metallhalogensalz ummantelt und vorteilhaft auch in Anwesenheit von Luft bzw. Sauerstoff für den Sintervorgang entsprechend aufgeheizt wurden.

### 1. Beispiel:

Al-Pulver (Alfa Aesar, ∼ 40 µm) wurde uniaxial bei 500 MPa verpresst und anschließend isostatisch bei 300 MPa in einen Zylinder mit einem Durchmesser von 8 mm und einer Höhe von 3 mm verpresst (Pellet).

Der zylindrische Grünkörper wurde mit KBr (Alfa Aesar) ummantelt, wobei typischerweise Schichtdicken des Metallhalogensalzes zwischen 1 und 10 mm, vorzugsweise zwischen 2 und 4 mm erzeugt wurden. Dazu wurden der Grünkörper in einen mit KBr gefüllten Tiegel mit einem größeren Durchmesser, z. B. Durchmesser 20 mm, als der Grünkörper gegeben, mit KBr abgedeckt und anschließend erneut bei 200 MPa verpresst. Der so mit KBr ummantelte Grünkörper wurde zusätzlich bei einem Druck von 300 MPa kalt isostatisch verpresst. Die Ummantelung wies dabei eine Dichte auf, die 98 % der theoretischen Dichte entspricht.

Der ummantelte Grünkörper wurde anschließend mit einer Heizrate von 5 °C/min bis auf 600 °C aufgeheizt und dort bei 600 °C für ca. 1 Stunde gehalten. Dies kann beispielsweise in einem normalen Ofen erfolgen.

Nach der Abkühlung konnte die gesinterte Aluminium-Komponente durch Auflösung des die Komponente umgebenen Metallhalogensalzes in Wasser oder alternativ durch Herausbrechen der Komponente aus dem erstarrten Salzmantel erhalten werden.

Die gesinterte Komponente wies eine Dichte von 92 % der theoretischen Dichte auf. Die entsprechenden Werte wurden durch Anwendung des Archimedischen Prinzips erhalten.

### 2. Beispiel:

Cu-Pulver (Alfa Aesar, ∼ 40 µm) wurde uniaxial bei 500 MPa verpresst und anschließend isostatisch bei 300 MPa in einen Zylinder mit einem Durchmesser von 8 mm und einer Höhe von 3 mm verpresst (Grünkörper).

Der zylindrische Grünkörper wurde mit KBr (Alfa Aesar) ummantelt, wobei typischerweise Schichtdicken des Metallhalogensalzes zwischen 1 und 10 mm, vorzugsweise zwischen 2 und 4 mm erzeugt wurden. Dazu wurden der Grünkörper in einen mit KBr gefüllten Tiegel mit einem größeren Durchmesser als der Grünkörper gegeben, mit KBr abgedeckt und anschließend erneut bei 200 MPa verpresst. Der so mit KBr ummantelte Grünkörper wurde zusätzlich bei einem Druck von 300 MPa kalt isostatisch verpresst.

Der ummantelte Grünkörper wurde anschließend mit einer Heizrate von 5 °C/min bis auf 900 °C aufgeheizt und dort bei 900 °C für ca. 1 Stunde gehalten.

Nach der Abkühlung konnte die gesinterte Kupfer-Komponente durch Auflösung des die Komponente umgebenen Metallhalogensalzes in Wasser in einem Ultraschallbad erhalten werden.

Die gesinterte Komponente wies eine Dichte von 70 % der theoretischen Dichte auf. Die entsprechenden Werte wurden durch Anwendung des Archimedischen Prinzips erhalten.

### 3. Beispiel:

Ti-Pulver (Alfa Aesar, ∼ 40 µm) wurde uniaxial bei 500 MPa verpresst und anschließend isostatisch bei 300 MPa in einen Zylinder mit einem Durchmesser von 8 mm und einer Höhe von 3 mm verpresst (Grünkörper).

Der zylindrische Grünkörper wurde mit KBr (Alfa Aesar) ummantelt, wobei typischerweise Schichtdicken des Metallhalogensalzes zwischen 1 und 10 mm, vorzugsweise zwischen 2 und 4 mm erzeugt wurden. Dazu wurden der Grünkörper in einen mit KBr gefüllten Tiegel mit einem größeren Durchmesser als der Grünkörper gegeben, mit KBr abgedeckt und anschließend erneut bei 200 MPa verpresst. Der so mit KBr ummantelte Grünkörper wurde zusätzlich bei einem Druck von 300 MPa kalt isostatisch verpresst.

Der zylindrische Grünkörper wurde in einem KBr-Bett (Alfa Aesar) angeordnet, welches ausreichend viel KBr umfasste, so dass beim Aufheizen ein Schmelzpool entstand, in dem der Grünkörper komplett von dem geschmolzenen Salz umgeben war.

Das Salzbett mit dem Grünkörper wurde mit einer Heizrate von 5 °C/min bis auf 1200 °C aufgeheizt und dort bei 1200 °C für ca. 1 Stunde gehalten.

Nach der Abkühlung konnte die gesinterte Titan-Komponente durch Auflösung des die Komponente umgebenen Metallhalogensalzes in Wasser in einem Ultraschallbad erhalten werden.

Die gesinterte Komponente wies eine Dichte von 94 % der theoretischen Dichte auf. Die entsprechenden Werte wurden durch Anwendung des Archimedischen Prinzips erhalten.

### 4. Beispiel

Ti₃SiC₂ -Pulver (Alfa Aesar, ∼ 40 µm) wurde in einen Zylinder mit einem Durchmesser von 8 mm uniaxial bei 200 MPa zu einem Grünkörper verpresst.

Der zylindrische Grünkörper wurde mit KBr (Alfa Aesar) ummantelt, wobei typischerweise Schichtdicken des Metallhalogensalzes zwischen 1 und 10 mm, vorzugsweise zwischen 2 und 4 mm erzeugt wurden. Dazu wurden der Grünkörper in einen mit KBr gefüllten Tiegel mit einem größeren Durchmesser als der Grünkörper gegeben, mit KBr abgedeckt und anschließend erneut bei 200 MPa verpresst. Der so mit KBr ummantelte Grünkörper wurde zusätzlich bei einem Druck von 300 MPa kalt isostatisch verpresst.

Der Grünkörper wurde anschließend in einem Aluminium-Schmelztiegel in ein KBr-Salzbett (Alfa Aesar) eingebettet, welches ausreichend viel KBr umfasste, so dass beim Aufheizen ein Schmelzpool entstand, in dem der Grünkörper komplett von geschmolzenen Salz umgeben war.

Das Salzbett mit dem Grünkörper wurde mit einer Heizrate von 5 °C/min von Raumtemperatur bis auf 1250 °C aufgeheizt und dort bei 1250 °C für ca. 1 Stunde gehalten.

Nach der Abkühlung wurde die gesinterte Komponente zusammen mit den erkalten Salz in Wasser gegeben, wo sich das die gesinterten Komponente umgebene Salz auflöste.

Die gesinterte Komponente wies eine Dichte von 75 % der theoretischen Dichte auf. Die entsprechenden Werte wurden durch Anwendung des Archimedischen Prinzips erhalten.

Zur Dichtebestimmung nach dem Archimedischen Prinzip wurde eine hydrostatische Waage verwendet. Die Masse des Körpers, dessen Dichte bestimmt werden soll, wird zunächst an der Luft bestimmt und dann erfolgt eine erneute Wägung, in der die Gewichtskraft des ins Wasser eingetauchten Körpers bestimmt wird. Die Differenz aus den beiden Wägungen entspricht dem Auftrieb, der auf den Körper ausgeübt wird und gleichzeitig der Gewichtskraft des verdrängten Wassers. Da die Dichte des Wassers 1,0 g/cm³ beträgt, lässt sich das Volumen des verdrängten Wassers und damit des Körpers bestimmen.

Diese wird dann mit der theoretischen Dichte, die für Keramiken und Metalle über die Kristallstruktur aus dem Masseninhalt der Elementarzelle entsprechend der Gitterkonstanten und ihrem Volumen berechnet werden kann, verglichen.

Ferner wurden thermische Untersuchungen (engl. Differential Scanning Calorimetry, DSC) und thermogravimetrische Untersuchungen für das System Ti mit KBr als Metallhalogenidsalz durchgeführt, die die abschirmende Wirkung des Metallhalogenidsalzes KBr bei der Synthese unter Luft verdeutlichen.

Die thermische Analyse (DSC) wurde in Luft an Proben mit und ohne Ummantelung von KBr durchgeführt, um die Verhinderung der Oxidation aufgrund der gasdichten Wirkung der KBr-Ummantelung zu bestätigen. Die Proben ohne Ummantelung zeigen eine starke Oxidation und eine deutliche Massenzunahme, während die zusätzlich ummantelten Proben nur eine geringe Oxidation aufweisen. Die Oxidation ist bei der Verkapselung deutlich geringer und endet nach Erreichen des Schmelzpunktes von KBr.

## Patentansprüche

1. Verfahren zum Sintern von metallischen und/oder nicht oxidischen, keramischen Komponenten, ***dadurch gekennzeichnet, dass***
- ein Grünkörper, umfassend wenigstens ein metallisches und/oder nicht oxidisches, keramisches Pulver, mit einem Metallhalogensalz vollständig ummantelt und gasdicht verpresst wird,
- zusammen mit einem Metallhalogensalz in Anwesenheit von Sauerstoff bis auf Sintertemperaturen aufgeheizt wird,
- und das Metallhalogensalz anschließend nach einer Abkühlung in einer Flüssigkeit zumindest teilweise aufgelöst wird, sodass die gesinterte Komponente entnommen werden kann.

2. Verfahren nach Anspruch 1, bei dem das Verpressen uniaxial oder kalt-isostatisch erfolgt.

3. Verfahren nach einem der Ansprüche 1 bis 2, bei dem das Verpressen und die Ummantelung bei Temperaturen bis maximal 200 °C, vorteilhaft bei Raumtemperatur erfolgt.

4. Verfahren nach einem der Ansprüche 1 bis 3, bei dem die Aufheizung wenigstens bis oberhalb der Temperatur erfolgt, in dem das eingesetzte Metallhalogensalz aufschmilzt.

5. Verfahren nach einem der Ansprüche 1 bis 4, bei dem die Aufheizung bis zu einer maximalen Temperatur von 1400 °C, vorzugsweise bis 1200 °C erfolgt.

6. Verfahren nach einem der Ansprüche 1 bis 5, bei dem wenigstens ein Metallhalogensalz (NZ) mit N = wenigstens ein Element aus der Gruppe Li, Na, K, Rb, Cs, Mg, Be, Ca, Ba, und Z = wenigstens ein Element aus der Gruppe F, Cl, Br, I, oder eine Mischung davon eingesetzt wird.

7. Verfahren nach einem der Ansprüche 1 bis 6, bei dem das Metallhalogensalz in Wasser oder einer wässrigen Lösung oder einem kurzkettigen Alkohol aufgelöst wird.

8. Verfahren nach einem der Ansprüche 1 bis 7, bei dem der mit dem Metallhalogensalz ummantelte und verpresste Grünkörper direkt einem geschmolzenen Metallhalogensalzbad zugegeben wird.

9. Verfahren nach einem der Ansprüche 1 bis 7, bei dem der mit dem Metallhalogensalz ummantelte und verpresste Grünkörper zunächst in einem Metallhalogensalzbad angeordnet, und anschließend zusammen auf Temperaturen oberhalb der Schmelztemperatur des Metallhalogensalzes aufgeheizt wird.

## Claims

1. A method for sintering metallic and/or non-oxide, ceramic components, **characterized in that**
- a green body, comprising at least one metallic and/or none-oxide, ceramic powder, is completely coated with a metal halide salt and pressed in a gas-tight manner,
- is heated up to sintering temperatures together with a metal halide salt in the presence of oxygen,
- and, then after a cooling, the metal halide salt is at least partially dissolved in a liquid so that the sintered component can be removed.

2. A method according to claim 1,
wherein the pressing takes place in an uniaxial or cold-isostatic manner.

3. A method according to any one of claims 1 to 2,
wherein the pressing and the coating take place at temperatures up to a maximum of 200 °C, advantageously at room temperature.

4. A method according to any one of claims 1 to 3,
wherein the heating takes place at least to above the temperature at which the metal halide salt used melts.

5. A method according to any one of claims 1 to 4,
wherein the heating takes place up to a maximum temperature of 1400 °C, preferably up to 1200 °C.

6. A method according to any one of claims 1 to 5,
wherein at least one metal halide salt (NZ) with N = at least one element from the group Li, Na, K, Rb, Cs, Mg, Be, Ca, Ba, and Z = at least one element from the group F, Cl, Br, I, or a mixture thereof is used.

7. A method according to any one of claims 1 to 6,
wherein the metal halide salt is dissolved in water or an aqueous solution or a short-chain alcohol..

8. A method according to any one of claims 1 to 7,
wherein the green body coated and pressed with the metal halide salt is added directly to a molten metal halide salt bath.

9. A method according to any one of claims 1 to 7,
wherein the green body coated and pressed with the metal halide salt is first placed in a metal halide salt bath and then heated together to temperatures above the melting temperature of the metal halide salt.

## Revendications

1. Procédé de frittage de composants céramiques, métalliques et/ou non oxydes,
***caractérisé en ce que***
- on enrobe entièrement d'un halogéno-sel de métal un corps cru, comprenant au moins une poudre céramique, métallique et/ou non-oxyde et on le comprime d'une manière étanche au gaz,
- on le porte ensemble avec un halogéno-sel de métal en présence d'oxygène jusqu'à des températures de frittage,
- et **en ce qu'**ensuite on dissout, au moins en partie, l'halogéno-sel de métal après un refroidissement dans un liquide, de manière à pouvoir prélever les composants frittés.

2. Procédé suivant la revendication 1, dans lequel on effectue la compression uniaxialement ou isostatiquement à froid.

3. Procédé suivant l'une des revendications 1 ou 2, dans lequel on effectue la compression et l'enrobage à des températures allant au maximum jusqu'à 200°C, de préférence à la température ambiante.

4. Procédé suivant l'une des revendications 1 à 3, dans lequel on effectue le chauffage au moins jusqu'au-dessus de la température, à laquelle l'halogéno-sel de métal utilisé fond.

5. Procédé suivant l'une des revendications 1 à 4, dans lequel on effectue le chauffage jusqu'à une température maximum de 1 400°C, de préférence jusqu'à 1 200°C.

6. Procédé suivant l'une des revendications 1 à 5, dans lequel on utilise au moins un halogéno-sel de métal (NZ) avec N = au moins un élément du groupe Li, Na, K, Cs, Mg, Be, Ca, Ba, et Z = au moins un élément du groupe F, Cl, Br, I, ou un mélange de ceux-ci.

7. Procédé suivant l'une des revendications 1 à 6, dans lequel on dissout l'halogéno-sel de métal dans de l'eau ou dans une solution aqueuse ou dans un alcool à chaîne courte.

8. Procédé suivant l'une des revendications 1 à 7, dans lequel on ajoute le corps cru enrobé de l'halogéno-sel de métal et comprimé directement à un bain fondu d'halogéno-sel de métal.

9. Procédé suivant l'une des revendications 1 à 7, dans lequel on met le corps cru enrobé de l'halogéno-sel de métal et comprimé, d'abord dans un bain d'halogéno-sel de métal et ensuite on les porte ensemble à des températures au-dessus du point de fusion de l'halogéno-sel de métal.
